# EUROPÄISCHE PATENTSCHRIFT

(11) **EP 1 194 712 B1**
(45) Veröffentlichungstag und Bekanntmachung des Hinweises auf die Patenterteilung: **29.09.2004**
(21) Anmeldenummer: 00953039.5
(22) Anmeldetag: 12.07.2000
(51) Int. Cl.: F16L 11/12

(54) **ROHRLEITUNGEN UND LEITUNGSELEMENTE ZUM TRANSPORTIEREN FLIESSFÄHIGER MEDIEN**
CONDUITS AND CONDUIT ELEMENTS FOR TRANSPORTING FLOWABLE MEDIA
CONDUITES ET ELEMENTS DE CONDUITES SERVANT A TRANSPORTER DES FLUIDES COULANTS

(30) Priorität: 14.07.1999 DE 19932828; 20.09.1999 DE 19945009
(43) Veröffentlichungstag der Anmeldung: 10.04.2002
(73) Patentinhaber: FITR Gesellschaft für Innovation im Tief- und Rohrleitungsbau Weimar m.b.H., 99427 Weimar (DE)
(72) Erfinder: KELLER, Hermann, D-99425 Weimar (DE); KRAUSEWALD, Jürgen, D-99425 Weimar (DE); BERGER, Wolfgang, D-99423 Weimar (DE)
(74) Vertreter: Kruspig, Volkmar, Dipl.-Ing.
(86) Internationale Anmeldenummer: PCT/EP2000/006654
(87) Internationale Veröffentlichungsnummer: WO 2001/004532

(56) Entgegenhaltungen:
- US-A- 4 621 953
- US-A- 5 070 937
- US-A- 5 133 516
- US-A- 5 343 738
- US-A- 5 415 225
- US-A- 5 577 555
- US-A- 5 682 946
- PATENT ABSTRACTS OF JAPAN vol. 010, no. 385 (M-548), 24. Dezember 1986 (1986-12-24) & JP 61 175486 A (MATSUSHITA ELECTRIC IND CO LTD), 7. August 1986 (1986-08-07)

## Beschreibung

Die Erfindung betrifft Rohrleitungen und Leitungselemente zum Transportieren fließfähiger Medien gemäß Oberbegriff des Patentanspruches 1.

Bei der Projektierung von Rohrleitungen und weiteren Leitungselementen, um ein fließfähiges Medium, wie beispielsweise Abwasser, Wasser, Öl und auch Gas, zu transportieren, war man bisher bestrebt, die Oberflächen an den Rohrinnenseiten möglichst glatt auszubilden, um dem strömenden Medium einen möglichst geringen Widerstand entgegenzusetzen. Dies galt sowohl für Leitungen, die drucklose Medien, wie beispielsweise Abwasser, transportieren als auch für Medien, die unter Druck stehen, wie beispielsweise Trinkwasser, Öl, Gas usw..

Nachteilig bei einer derartigen Ausbildung der Rohrinnenseite ist jedoch, daß sich insbesondere in Bereichen von Rohrkrümmungen, Abzweigungen, Vereinigungen, Reduzierungen und Rohrerweiterungen Materialien an der Rohrinnenwand anlagern können, die aus dem jeweils transportierten fließfähigen Medium stammen und im Laufe der Zeit auch zu einer Verengung des Strömungsquerschnitts und zu einer Verminderung der Transportleistung der jeweiligen Rohrleitung führen können.

Aus der US-PS 5,682,946 ist ein Austauscherrohr für einen Wärmetauscher vorbekannt, welches eine Rippen-Oberflächenstruktur mit diffuser Aufrankung durch gestrahlten Korund aufweist. Die Oberflächenstruktur in Inneren des Rohres besitzt und gerundete Übergänge ohne scharfe Kanten und ist durch Walzprägen herstellbar.

Bei der gattungsbildenden US-PS 5,070,937 ist ein innenseitig verbessertes Wärmetauscherrohr gezeigt, das eine Struktur besitzt, welche Blöche umfäßt, die sich unter einer Winkellage in Fließrichtung abwechseln.

Die dortigen Übergange zwichen den Blöchen besitzen außerdem einen stufenförmigen Verlauf, so daß sich insgesamt eine verbesserte Wärmeübertragung ergibt.

Die der Erfindung zugrundeliegende Aufgabe besteht darin, Rohrleitungen zum Transport fließfähiger Medien zu schaffen, die einen strömungsoptimierten Transport eines fließfähigen Mediums mit verbesserter Schleppwirkung gewährleistet, und zwar sowohl bei drucklosen Medien als auch bei unter Druck stehenden Medien.

Diese Aufgabe wird nach der Lehre des Patentanspruchs 1 gelöst. Die Unteransprüche umfassen zweckmäßige Ausgestaltungen und Weiterbildungen der Erfindung.

Es hat sich gezeigt, daß sich bei einer speziell strukturierten Oberfläche einer Rohrinnenwand eine derartige Grenzschicht ausbildet, die bewirkt, daß der eigentliche Medientransport im Prinzip ohne unmittelbare direkte Berührung zwischen dem Mediumstrom und der unmittelbaren Rohrwandung erfolgt. Durch diese Grenzschichtausbildung wird die Fließgeschwindigkeit des transportierten Mediums beeinflußt und die Fähigkeit, in dem Medium mitgeführte Partikel mitzureißen, gesteigert (es erfolgt eine Erhöhung der Schleppwirkung). Es hat sich somit in überraschender Weise herausgestellt, daß bei speziell strukturierten Oberflächen die Neigung, daß Partikel an der Rohrinnenseite haften bleiben, stark reduziert ist.

Ein Merkmal besteht darin, daß die makroskopisch strukturierte Oberfläche hoch und tief oder konkav-konvex liegende Bereiche aufweisen, die sich quer zur Fließrichtung ständig abwechseln. Dabei können die hoch und tief liegenden Bereiche sich vorzugsweise in einem Winkel von 1° bis 90° quer zur Fließrichtung abwechseln.

Die hoch und tief liegenden Bereiche können linienförmig oder auch punktförmig ausgebildet sein.

Versuche haben ergeben, daß eine wirksame Ausbildung der turbulenten bzw. quasiturbulenten Grenzschicht von verschiedenen Faktoren abhängt, wie beispielsweise der Beschaffenheit des in der Rohrleitung zu transportierenden Mediums oder des Druckes und der Temperatur des Mediums.

Eine vorteilhafte weitere Ausführungsform nach der Erfindung besteht darin, daß die strukturierte Oberflächen sich in Umfangsrichtung entlang der Rohrinnenwand ändern. Diese Änderungen können zweckmäßigerweise allmählich bzw. kontinuierlich, aber auch in verschiedenen Stufen erfolgen. Bei dieser Ausführungsform können die hoch liegenden Bereiche aus ringförmigen Erhebungen und die tief liegenden Bereiche aus nutenförmigen Vertiefungen bestehen, die sich entlang dem Innenumfang der Rohrleitung erstrecken.

Eine weitere Ausführungsform nach der Erfindung besteht darin, daß speziell die hoch liegenden Bereiche aus quaderförmigen Erhebungen gebildet sind, während die tief liegenden Bereiche den Zwischenräumen entsprechen.

Eine weitere alternative Ausführungsform ist dadurch gekennzeichnet, daß die hoch liegenden Bereiche aus Pyramiden oder Pyramidenstümpfen bestehen, während sich die tief liegenden Bereiche aus den Räumen zwischen den Pyramiden oder den Pyramidenstümpfen ergeben.

Bei dieser letzteren Ausführungsform können die Seitenflächen und die Seitenkanten der Pyramiden bzw. der Pyramidenstümpfe zweckmäßigerweise konkav verlaufend ausgebildet sein.

Des weiteren können konkave oder konvexe Kugelsegmente, Kreiszylinder und Kreiskegel oder Kombinationen der genannten geometrischen Körper ausgebildet werden.

Eine weitere Alternative besteht darin, daß die tief liegenden Bereiche aus in Umfangsrichtung verlaufenden Nuten mit einem halbkreisförmigen Querschnitt gebildet sind; während die hoch liegenden Bereiche jeweils den Randbereichen zweier benachbarter Nuten entsprechen. Bei dieser Ausführungsform kann der jeweils durch zwei benachbarte Nuten gebildete Randbereich als scharfe Kante oder auch elliptisch, exponentiell oder stufenförmig ausgebildet sein.

All diese möglichen verschiedenen Oberflächenstrukturen können entweder aus dem Material der Rohrleitung selbst gebildet sein oder durch ein von dem Rohrleitungsmaterial unabhängigen bzw. getrennten Material gebildet werden.

Im einzelnen ist die Erfindung ferner dadurch weiter ausgestaltet, daß die strukturierte Oberfläche in Form einer auf die Rohrinnenwand aufgebrachte Beschichtung realisiert ist, wobei die Beschichtung auch aus Folien oder Platten bestehen kann, die auf die Rohrinnenwand aufgebracht werden.

Im folgenden soll die Erfindung anhand von Ausführungsbeispielen sowie von Prinzipskizzen näher erläutert werden. Dabei sind zum besseren Verständnis die einzelnen Varianten der Oberflächenstrukturierung gegenüber der Rohrwanddicke vergrößert dargestellt worden. Auf den nachfolgenden Figuren wird folgendes dargestellt:
- Fig. 1: eine unmaßstäbliche perspektivische Ansicht eines bekannten Rohrabschnitts;
- Fig. 2: eine unmaßstäbliche perspektivische Darstellung eines weiteren bekannten Rohrabschnitts bei der tief liegende Bereiche als in Umfangsrichtung verlaufende Nuten ausgebildet sind;
- Fig. 3: eine unmaßstäbliche perspektivische Ansicht eines Rohrabschnitts gemäß einer Ausführungsform nach der Erfindung, bei der die hoch liegenden Bereiche durch quaderförmige Blöcke gebildet sind;
- Fig. 4: eine unmaßstäbliche perspektivische Darstellung einer in eine Rohrleitung einbringbaren strukturierten Folie, die entsprechend der Ausführungsform nach Fig. 3 ausgebildet ist;
- Fig. 5: eine unmaßstäbliche perspektivische Darstellung eines Rohrabschnitts gemäß einer weiteren alternativen Ausführungsform, bei der die höher liegenden Bereiche pyramidenförmig gestaltet sind;
- Fig. 6: eine unmaßstäbliche perspektivische Ansicht einer rohrförmigen strukturierten Folie, die gemäß der Ausführungsform nach Fig. 5 an ihrer Innenwand ausgebildet ist; und
- Fig. 7: eine unmaßstäbliche perspektivische Ansicht einer strukturierten Folie gemäß einer weiteren alternativen Ausführungsform nach der Erfindung, bei der die hoch liegenden Bereiche durch Pyramiden gebildet sind.

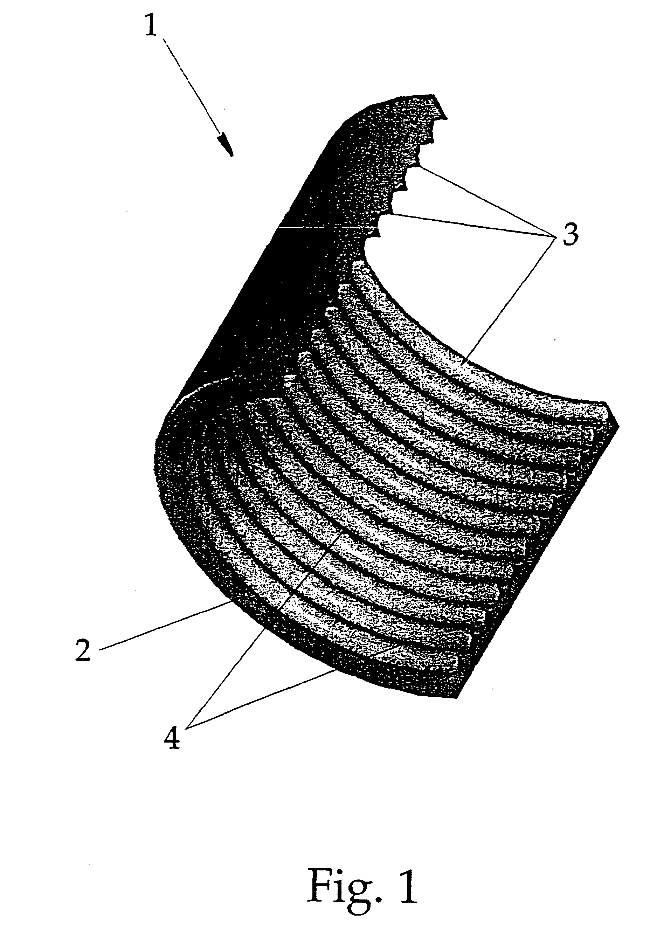

Fig. 1 zeigt eine unmaßstäblich vergrößerte perspektivische Ansicht eines Rohrabschnitts, von dem ein Teil weggeschnitten ist, um das Innere des Rohrabschnitts einsehen zu können. Der gezeigte Rohrabschnitt ist allgemein mit 1 bezeichnet und besitzt eine speziell strukturierte makroskopische innere Oberfläche 2. Diese Oberflächenstruktur umfaßt in Umfangsrichtung verlaufende nebeneinander liegende Nuten 3, die bei dem gezeigten Ausführungsbeispiel einen halbkreisförmigen Querschnitt besitzen.

Es sei darauf hingewiesen, daß für die Nuten 3 auch andere Querschnittsformen, beispielsweise dreieckförmig, rechteckförmig oder auch elliptisch denkbar sind.

Die hoch liegenden Bereiche der Oberflächenstruktur sind mit 4 bezeichnet und sie werden durch die Randbereiche von jeweils zwei benachbarten Nuten 3 gebildet. Diese hoch liegenden Bereiche 4 können als scharfe Kanten ausgebildet sein.

Ebenso können jedoch diese hoch liegenden Bereiche aus flächigen, ringförmigen Abschnitten bestehen.

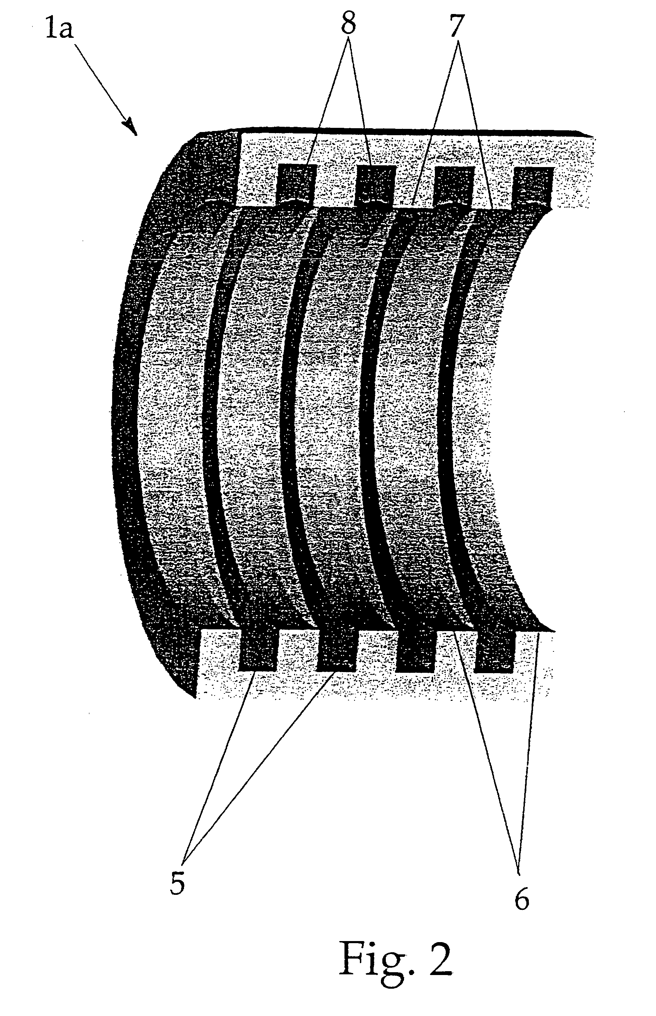

Fig. 2 zeigt eine unmaßstäblich vergrößerte Form einer makroskopischen Oberflächenstruktur an der Innenwand eines allgemein mit 1a bezeichneten Rohrabschnitts.

Bei dieser Form sind die tief liegenden Bereiche durch rechteckförmige Nuten 5 gebildet, deren Tiefe sich auch ändern kann.

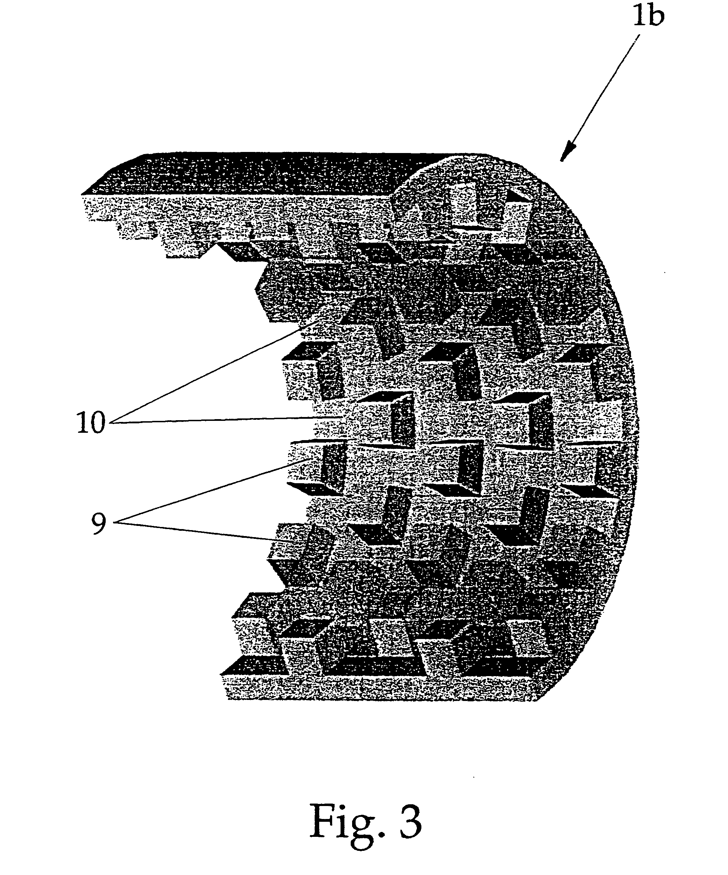

Eine Ausführungsform nach der Erfindung ist in Fig. 3 dargestellt. Der in Fig. 3 perspektivisch dargestellte Rohrabschnitt 1b weist eine Innenwand auf, die eine Vielzahl von quaderförmigen oder pyramidenstumpfförmigen Blöcken 9 aufweist, die durch Zwischenräume 10 voneinander getrennt sind. Die quaderförmigen oder pyramidenstumpfförmigen Blöcke 9 können in Umfangsrichtung jeweils gleich großen Abstand zueinander haben und sie sind in verschiedenen Reihen in Umfangsrichtung verlaufend ausgebildet, derart, daß die quaderförmigen oder pyramidenstumpfförmigen Blöcke einer Reihe gegenüber den quaderförmigen oder pyramidenstumpfförmigen Blöcken einer benachbarten Reihe in Umfangsrichtung versetzt angeordnet sind, wobei auch andere geometrische Formen wie Kreiszylinder, Kugelsegmente o.ä. möglich sind.

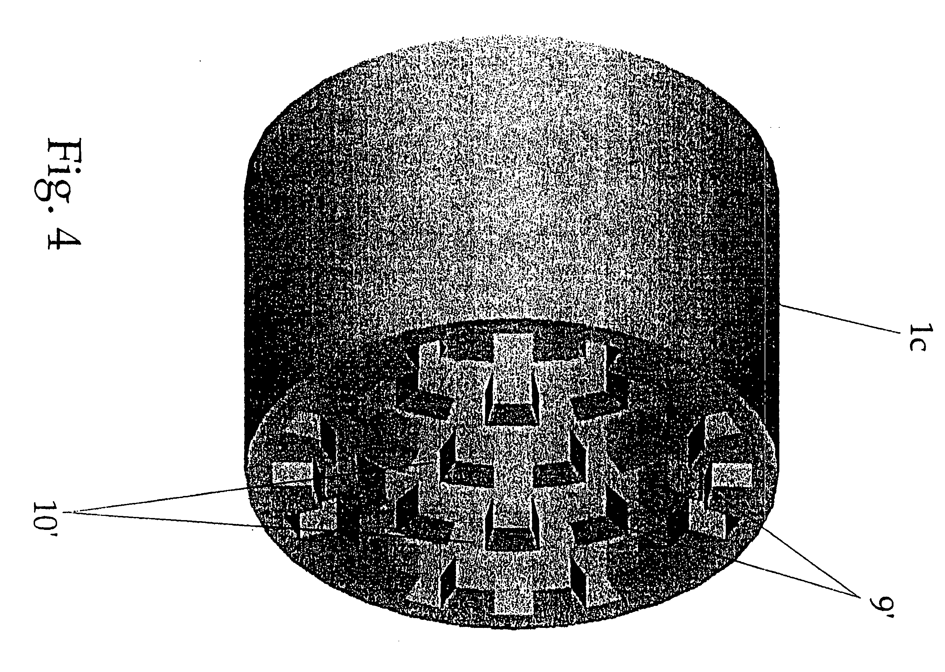

Fig. 4 zeigt eine alternative Ausführungsform der vorliegenden Erfindung in Form eines rohrförmigen strukturierten Folien- oder Platteneinsatzes 1c, der eine glatte Außenwand aufweist, jedoch eine Innenwandung besitzt, die entsprechend der Ausführungsform nach Fig. 3 ausgebildet ist. Die Innenwand enthält somit z.B. quaderförmige oder pyramidenstumpfförmige Blöcke 9', welche durch Zwischenräume 10' voneinander getrennt sind. Die in Fig. 4 gezeigte rohrförmige strukturierte Folie kann in ein entsprechend bemessenes Rohr mit einer glatten Innenwand eingesetzt und mit dem Rohr, beispielsweise durch Kleben, verbunden werden.

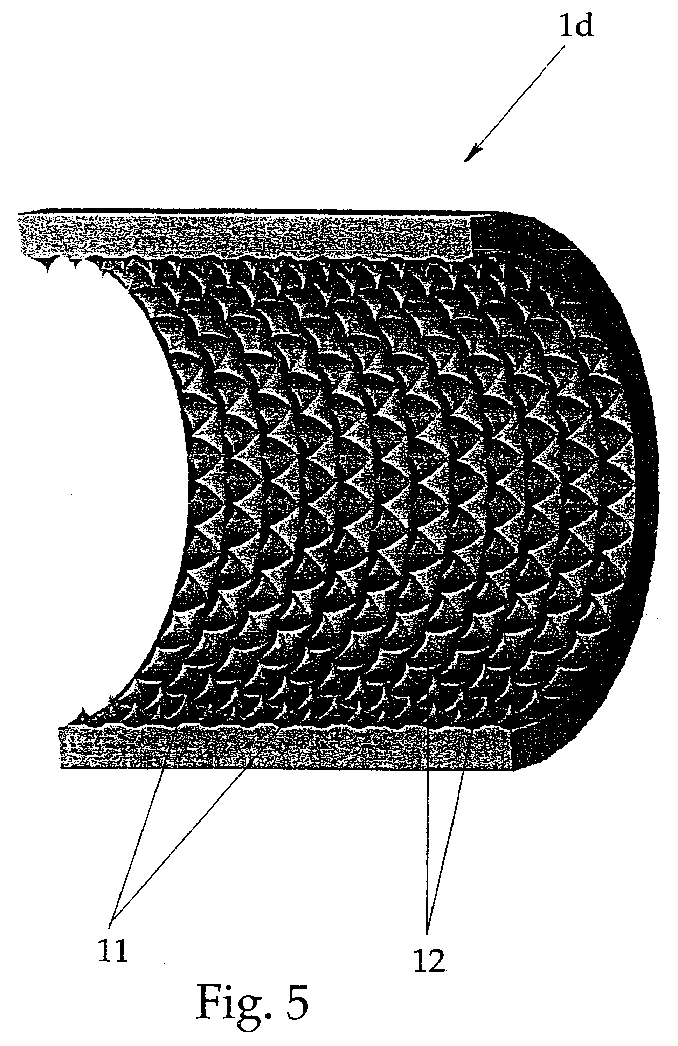

Fig. 5 zeigt eine Ausführungsform der Erfindung anhand eines Rohrabschnitts 1d mit einer speziell strukturierten Innenwand. Die Oberflächenstruktur der Innenwand umfaßt eine Vielzahl von beabstandeten pyramidenförmigen Erhebungen 11, wobei Zwischenräume 12 vorgesehen sind. Bei der gezeigten Ausführungsform ist eine Vielzahl von pyramidenförmigen Erhebungen 11 in mehreren nebeneinander in Umfangsrichtung verlaufenden Reihen angeordnet, derart, daß die Pyramiden in einer in Umfangsrichtung verlaufenden Reihe gegenüber den Pyramiden in einer benachbarten in Umfangsrichtung verlaufenden Reihe versetzt sind.

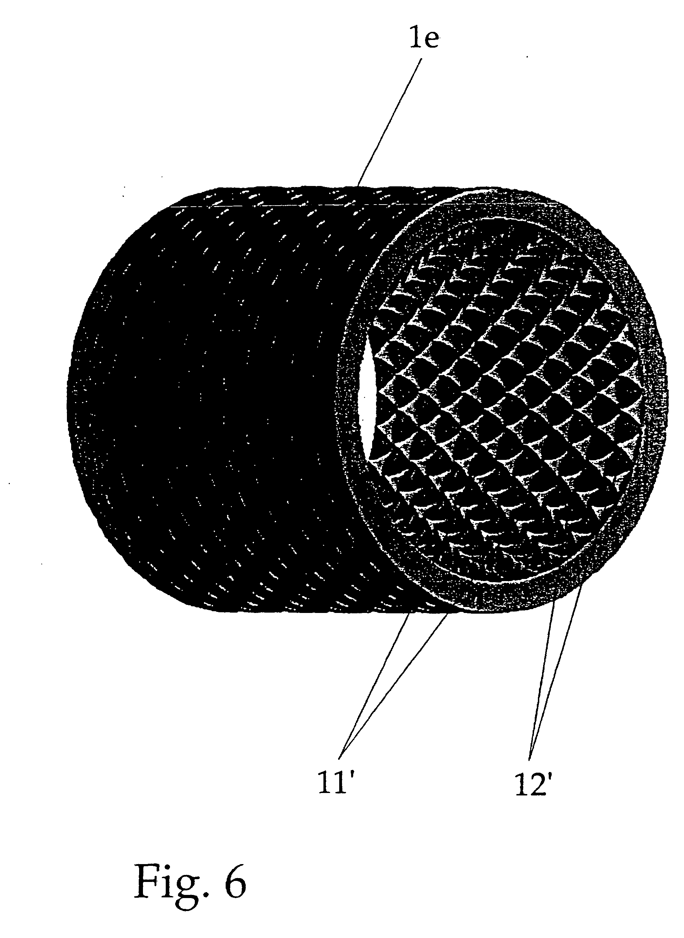

Fig. 6 offenbart einen rohrförmigen Folienabschnitt 1e, der eine im wesentlichen glatte Außenfläche haben kann und der in ein entsprechend bemessenes Rohr einsetzbar ist und in diesem beispielsweise durch Kleben befestigt werden kann.

Die Oberflächenstruktur der Innenwand des rohrförmigen Folienabschnitts 1e ist ähnlich wie bei der Ausführungsform nach Fig. 5 ausgebildet, das heißt es ist eine Vielzahl von pyramidenförmigen makroskopischen Erhebungen 11' vorgesehen, die sich mit Zwischenräumen 12' abwechseln.

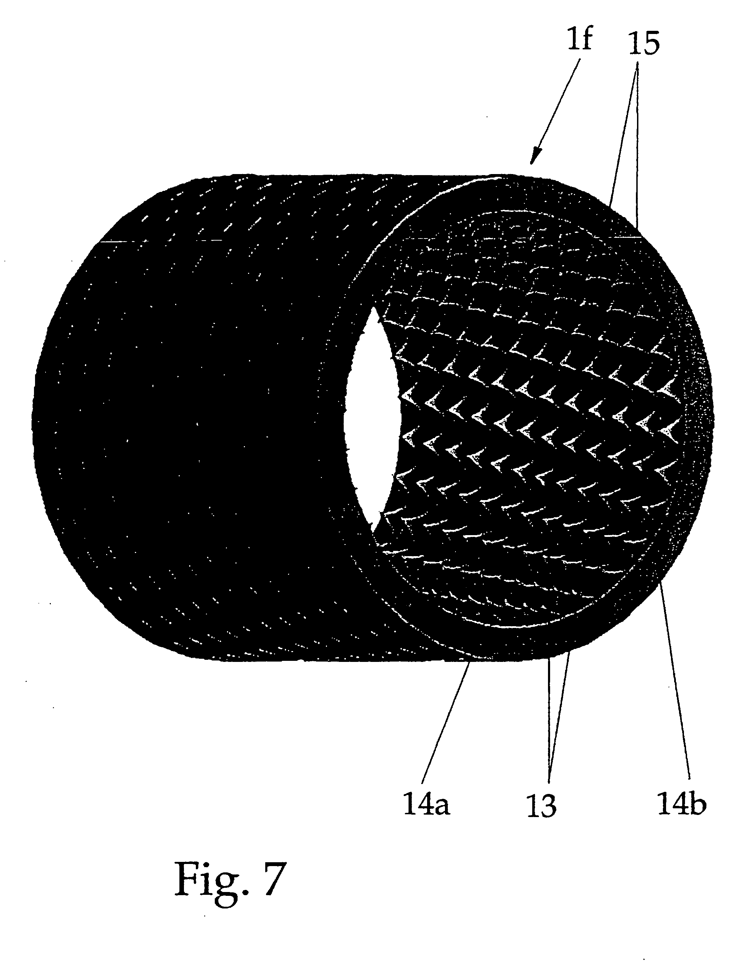

Fig. 7 zeigt schließlich eine alternative Gestaltung der Ausführungsform nach Fig. 5 bzw. Fig. 6. Hier ist ein rohrförmiger strukturierter Folienabschnitt mit 1f bezeichnet und besitzt eine im wesentlichen glatte Außen-Oberfläche.

Die Oberfläche der Innenwand besitzt beispielhaft wiederum eine Vielzahl von pyramidenförmigen Erhebungen 13, die durch Zwischenräume 15 voneinander getrennt sind. Die pyramidenförmigen Erhebungen 13 sind auch bei dieser Ausführungsform in in Umfangsrichtung verlaufenden Reihen angeordnet, wobei aber der Versatz der Pyramiden in Umfangsrichtung von einer Reihe zur nächstfolgenden nur geringfügig ist, so daß die pyramidenförmigen Erhebungen 13 in Längsrichtung des Rohres in einer weitläufigen Spiralform verlaufen. Diese etwa in Strömungsrichtung verlaufenden Pyramidenreihen sind mit 14a und 14b bezeichnet.

Es besteht ergänzend die Möglichkeit, die Erhebungen kegelstumpfförmig, spitzdachförmig, zylinderförmig oder auch trapezförmig auszubilden. Auch sind Kombinationen der genannten Formen realisierbar.

Die erläuterten Ausführungsformen können sowohl aus dem Material der jeweiligen Rohrleitung selbst bestehen, so daß sich einstückige Lösungen ergeben, oder es ist eine Beschichtung oder der Einsatz einer entsprechend strukturierten Folie oder Platte möglich.

## Patentansprüche

1. Rohrleitungen und Leitungselemente (1) zum Transportieren fließfähiger Medien, wobei die Rohrinnenseite, welche mit dem fließfähigen Medium in Berührung kommt, eine strukturierte Oberfläche aufweist und die Struktur aus quer zur Fließrichtung abwechselnden hoch und tief liegenden Bereichen (9, 10, 9', 10', 11, 12) besteht,
die hoch und tief liegenden Bereiche sich quer in einem Winkel von 1° bis 90° zur Fließrichtung ständig abwechseln, die hoch liegenden Bereiche aus makroskopischen, quaderförmigen Blöcken oder Platten bestehen, die auf der Rohrinnenwandung befindlich sind, und die Übergänge zwischen den hoch und tief liegenden Bereichen einen stufenförmigen Verlauf aufweisen, **dadurch gekennzeichnet, daß**
die strukturierte Oberfläche radial über den Innenumfang der Rohrwandung variiert so daß sich die Schleppwirkung bezüglich im Medium mitgeführter Partikel erhöht.

2. Rohrleitungen und Leitungselemente nach Anspruch 1,
**dadurch gekennzeichnet, daß**
die Variation allmählich oder kontinuierlich erfolgt.

3. Rohrleitungen und Leitungselemente nach einem der Ansprüche 1 oder 2,
**dadurch gekennzeichnet, daß**
die hochliegenden Bereiche aus Pyramiden oder Pyramidenstümpfen bestehen.

4. Rohrleitungen und Leitungselemente nach Anspruch 3,
**dadurch gekennzeichnet,**
**daß** die Seitenflächen und die Seitenkanten der Pyramiden oder der Pyramidenstümpfe konkav oder konvex verlaufend ausgebildet sind.

5. Rohrleitungen und Leitungselemente nach einem der vorhergehenden Ansprüche,
**dadurch gekennzeichnet,**
**daß** die strukturierte Oberfläche aus dem Material der Rohrleitung gebildet ist.

6. Rohrleitungen und Leitungselemente nach einem der Ansprüche 1 bis 5,
**dadurch gekennzeichnet,**
**daß** die strukturierte Oberfläche durch ein Beschichtungsmaterial gebildet ist.

7. Rohrleitungen und Leitungselemente nach Anspruch 6, **gekennzeichnet durch**
eine auf der Rohrinnenwand aufgebrachte Beschichtung, welche eine strukturierte Oberfläche nach einem der Ansprüche 1 bis 4 aufweist.

8. Rohrleitungen und Leitungselemente nach Anspruch 7,
**dadurch gekennzeichnet,**
**daß** die Beschichtung aus einer Folie oder Platte besteht, die auf die Rohrinnenwand aufgebracht ist.

## Claims

1. Conduits and conduit elements (1) for transporting flowable media, with the inner tube side, which contacts the flowable medium, having a textured surface, and the texture being composed of areas (9, 10; 9', 10'; 11, 12) situated high and low alternating transversely to the flow direction, the areas situated high and low steadily alternating at an angle of 1° to 90° transversely to the flow direction, the areas situated high being composed of macroscopic parallelepiped blocks or plates present on the inner tube wall, and the transitions between the areas situated high and low having a stepped development, **characterized in that** the textured surface varies radially over the inner circumference of the tube wall so that the drag action with respect to particles carried along in the medium is increased.

2. Conduits and conduit elements according to claim 1, **characterized in that** said variation takes place gradually or continuously.

3. Conduits and conduit elements according to any one of claims 1 or 2, **characterized in that** the areas situated high consist of pyramids or truncated pyramids.

4. Conduits and conduit elements according to claim 3, **characterized in that** the lateral faces and the lateral edges of the pyramids or truncated pyramids are realized so as to extend concavely or convexly.

5. Conduits and conduit elements according to any one of the preceding claims, **characterized in that** the textured surface is formed by the material of the conduit.

6. Conduits and conduit elements according to any one of claims 1 through 5, **characterized in that** the textured surface is formed by a coating material.

7. Conduits and conduit elements according to claim 6, **characterized by** a coating applied to the inner tube wall, which coating has a textured surface according to any one of claims 1 through 4.

8. Conduits and conduit elements according to claim 7, **characterized in that** the coating is comprised of a foil or plate that is applied to the inner tube wall.

## Revendications

1. Systèmes de tuyauteries et éléments de conduite (1) pour transporter des fluides capables de s'écouler, dans lesquels :
- le côté intérieur des conduits entrant en contact avec le fluide capable de s'écouler présente une surface structurée ;
- la structure se compose de zones (9, 10, 9', 10', 11, 12) qui sont placées alternativement en haut et en bas perpendiculairement au sens d'écoulement ;
- les zones placées en haut et en bas alternent en permanence perpendiculairement au sens d'écoulement sous un angle de 1 à 90° ;
- les zones placées en haut se composent de blocs en forme de parallélépipède ou de plaques macroscopiques qui se trouvent sur la paroi intérieure du conduit ; et
- les transitions entre les zones placées en haut et en bas présentent un tracé en forme de gradins,
**caractérisés en ce que** la surface structurée varie radialement sur la circonférence intérieure de la paroi du conduit de manière à accroître l'effet de traînée vis-à-vis des particules entraînées dans le fluide.

2. Systèmes de tuyauteries et éléments de conduite selon la revendication 1, **caractérisés en ce que** la variation a lieu progressivement ou en continu.

3. Systèmes de tuyauteries et éléments de conduite selon l'une ou l'autre des revendications 1 et 2, **caractérisés en ce que** les zones placées en haut se composent de pyramides ou de troncs de pyramide.

4. Systèmes de tuyauteries et éléments de conduite selon la revendication 3, **caractérisés en ce que** les faces latérales et les arêtes latérales des pyramides ou des troncs de pyramide sont réalisées avec un tracé concave ou convexe.

5. Systèmes de tuyauteries et éléments de conduite selon l'une des revendications précédentes, **caractérisés en ce que** la surface structurée est formée à partir du matériau de la tuyauterie.

6. Systèmes de tuyauteries et éléments de conduite selon l'une des revendications 1 à 5, **caractérisés en ce que** la surface structurée est formée par un matériau de revêtement.

7. Systèmes de tuyauteries et éléments de conduite selon la revendication 6, **caractérisés par** un revêtement appliqué sur la paroi intérieure du conduit, lequel présente une surface structurée selon l'une des revendications 1 à 4.

8. Systèmes de tuyauteries et éléments de conduite selon la revendication 7, **caractérisés en ce que** le revêtement se compose d'un film ou d'une plaque qui est apposé(e) sur la paroi intérieure du conduit.
